# EUROPEAN PATENT APPLICATION

(11) **EP 2 469 881 A1**
(43) Date of publication of application: **27.06.2012**
(21) Application number: 11192960.0
(22) Date of filing: 12.12.2011
(51) Int. Cl.: H04N 21/472, H04N 21/658, H04N 21/6587, H04N 21/845, H04N 21/258

(54) **Cloud computing based video service and playing methods**

(30) Priority: 22.12.2010 KR 20100132058
(71) Applicant: Samsung Electronics Co., Ltd., Suwon-si, Gyeonggi-do (KR)
(72) Inventor: Cho, Sung Pil, Gyeonggi-do (KR)
(74) Representative: Jenkins, Richard Gavin

(57) **Abstract**

Cloud computing based video service and playing methods that enable a plurality of terminals to continuously view a video are provided. The video service method of a cloud computing server includes transmitting a requested video to a terminal in a streaming manner when the terminal requests play of the video, stopping the streaming transmission of the video and storing a stopped time point of the play in a user database when the terminal stops the play of the video, and transmitting the video beginning with a frame of the video at the stopped time point to the terminal or another terminal having requested play of the video in the streaming manner when the terminal or the other terminal requests the play of the video, in which the terminal or the other terminal having requested the play receives and plays the video beginning with the frame of the video at the stopped time point in a real-time manner.

## Description

### BACKGROUND OF THE INVENTION

### 1. Field of the Invention:

The present invention relates to a video service and playing methods, and more particularly, although not exclusively, to a cloud computing based video service and playing methods. More particularly, although not exclusively, the present invention relates to a cloud computing based video service and playing methods that enable a first or second terminal to continue to view a video at a time point in the video where the first terminal stopped viewing the video.

### 2. Description of the Related Art:

A computing environment of the related art depends on separate hardware performance of each terminal. With the development of computer network technology, the computing environment of the related art has evolved into a cloud computing environment that provides a corresponding service using various computing resources on a network according to a request of a terminal.

Cloud computing may refer to an 'on demand outsourcing service of a computer resource' through an information and communication network such as the Internet. In a cloud-computing environment, a service provider combines data centers distributed at different physical locations by a virtualization technology to provide services used by users. A service user does not necessarily have to install supplemental hardware and/or software to use computing resources such as applications, storage, Operating Systems (OSs), or security in a terminal of the user, but selects and uses desired services on a virtual space created through a virtualization technology at a desired time. In other words, cloud computing is a computing service that allows a user to borrow and use desired computing resources including formless hardware or software used by the user and to pay a service fee with respect thereto.

In the cloud computing, a user accesses a cloud network through a terminal that functions to provide a network connection and a fundamental calculation function, and performs operations required by a mass storage device and a high performance computing resource to be provided with various services.

However, in the cloud computing of the related art, after a first terminal plays a video and then stops the video, when the first terminal or a second terminal is to play the video from the stopped time point, a user has to move a start point of the playing of the video to a stopped time point of the first terminal. That is, it is inconvenient for the first or second terminal to continue to view the video at a time point in the video where the first terminal stopped viewing the video, in the cloud computing of the related art.
It is an aim of certain embodiments of the invention to solve, mitigate or obviate, at least partly, at least one of the problems and/or disadvantages associated with the prior art. Certain embodiments aim to provide at least one of the advantages described below.

### SUMMARY OF THE INVENTION

Certain embodiments of the present invention aim to address the above-mentioned problems and/or disadvantages and to provide at least the advantages described below. Accordingly, an aim of certain embodiments of the present invention is to provide a cloud computing based video service and playing methods that enable a first or second terminal to continue to view a video at a time point in the video where the first terminal stopped viewing the video.

In accordance with an aspect of the present invention, a video service method of a server, for example a cloud computing server, is provided. In other words, the method is a method performed by the server or can be regarded as a method of operating the server. The method includes transmitting a requested video to a terminal in a streaming manner (i.e. video data is transmitted in a suitable form, such as a sequential data stream, such that the terminal can receive and display the video to a user in real time as the video data is received, without having to wait until the entire video file has been received) when the terminal requests play of the video, stopping the streaming transmission of the video and storing a stopped time point of the play in a user database when the terminal stops the play of the video, and transmitting the video beginning with a frame of the video at the stopped time point to the terminal or another terminal having requested play of the video in the streaming manner when the terminal or the other terminal requests the play of the video, wherein the terminal or the other terminal having requested the play receives and plays the video beginning with the frame of the video at the stopped time point, for example in a real-time manner.

In certain embodiments, the method further includes determining a cut-off time point as the stopped time point and storing the determined cut-off time point in the user database when connection with the terminal is cut-off and sending an inquiry to the terminal or the another terminal having requested the play to inquire whether the terminal or the other terminal selects to view the video from the beginning or to continue to view the video from the stopped time point.

In certain embodiments the method further includes receiving a start time point of play with respect to the video from the terminal and storing the received start time point of play in the user database, and transmitting the video beginning with a frame at the start time point to the terminal or other terminal having requested the play of the video in a streaming manner when the play of the video is requested from the terminal or the other terminal.

In certain embodiments the method further includes periodically receiving a current playing time point of the video from the terminal, recording the current playing time point in the user information, and determining the current playing time point as the stopped time point and storing the determined current playing time point in the user database when connection with the terminal is cut-off.

In accordance with another aspect of the present invention, a video service method of a server, for example a cloud computing server, is provided. The method includes receiving a request for play of a video from a terminal, checking a user database of the terminal, and transmitting the video beginning with a frame at a stopped time point in a streaming manner when the video was stopped while previously being played, wherein the terminal receives and plays the video beginning with the frame at the stopped time point, for example in a real-time manner.

In accordance with another aspect of the present invention, a method for playing a video of (i.e. by) a terminal is provided. The method includes receiving the video from a server, for example a cloud computing server, and playing the received video in a real-time manner, stopping play of the video according to a request of a user, and transmitting the stopped time point of the play to the server, e.g. cloud computing server, wherein the server, e.g. cloud computing server, transmits the video beginning with a frame at the stopped time point to the terminal or another terminal in a steaming manner when the terminal or the other terminal requests the video.

In certain embodiments the method further includes periodically transmitting a current playing time point of the video to the cloud computing server, wherein the cloud computing server transmits the video beginning with a frame of the current play time point in a streaming manner when the terminal or other terminal again requests to play the video after connection with the terminal is cut-off.

In accordance with another aspect of the present invention, a server, for example a cloud computing server, for providing a video service is provided. The server, e.g. cloud computing server, includes a memory for storing a user database, a communication unit for communicating with one or more terminals, and the controller for controlling the memory and the communication unit. The controller controls to transmit a requested video to a terminal in a streaming manner when the a first request to play the video is received from the terminal, controls to stop the streaming transmission of the video and store a stopped time point of the play in the user database when an indication is received from the terminal that the playing of the video by the terminal has stopped, and controls to transmit the video beginning with a frame of the video at the stopped time point to the terminal or another terminal from which a second request to play the video in the streaming manner is received.

In accordance with another aspect of the present invention, a server, e.g. a cloud computing server, for providing a video service is provided. The server, e.g. cloud computing server, includes a memory for storing a user database, a communication unit for communicating with one or more terminals, and the controller for controlling the memory and the communication unit. The controller, when a request to play a video is received from a terminal, checks the user database of the terminal, and controls to transmit the video beginning with a frame at a stopped time point in a streaming manner when the video was stopped while previously being played.

In accordance with another aspect of the present invention, a terminal for playing a video by using a video service is provided. The terminal includes a memory for storing a user database, a communication unit for communicating with one or more terminals, and the controller for controlling the memory and the communication unit. The controller includes a memory, a communication unit for communicating with a server, for example a cloud computing server, and a controller for controlling the memory and the communication unit. The controller, when the video is received from a server, e.g. a cloud computing server, controls to play the received video in a real-time manner, controls to stop play of the video according to a request of a user, and controls to transmit the stopped time point of the play to the cloud computing server.

According to exemplary embodiments of the present invention a video watched using mobile phones or tablet Personal Computers (PCs) at commuting hours, which do not provide a sufficient time to watch a movie, may be continuously watched using Internet Protocol Televisions (IPTVs) or PCs at home.
Another aspect of the invention provides a computer program comprising instructions arranged, when executed, to implement a method and/or apparatus in accordance with any one of the above-described aspects. A further aspect provides machine-readable storage storing such a program.

Other aspects, and advantages and salient features of aspects and embodiments of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, and features and advantages of aspects and embodiments of the present invention will be more apparent from the following description taken in conjunction with the accompanying drawings, in which:

FIG. 1 is a block diagram illustrating a configuration of a network of a cloud computing based video service system according to an exemplary embodiment of the present invention;

FIG. 2 is a block diagram illustrating a configuration of a terminal according to an exemplary embodiment of the present invention;

FIG. 3 is a flowchart illustrating a video service method of a cloud computing server according to a first exemplary embodiment of the present invention;

FIG. 4 is a flowchart illustrating a video service method of a cloud computing server according to a second exemplary embodiment of the present invention;

FIG. 5 is a flowchart illustrating a video service method of a cloud computing server according to a third exemplary embodiment of the present invention;

FIG. 6 is a flowchart illustrating a video playing method of a terminal according to a first exemplary embodiment of the present invention; and

FIG. 7 is a flowchart illustrating a video playing method of a terminal according to a second exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Hereinafter, a cloud computing based video service and playing methods according to exemplary embodiments of the present invention are described with reference to the accompanying drawings.

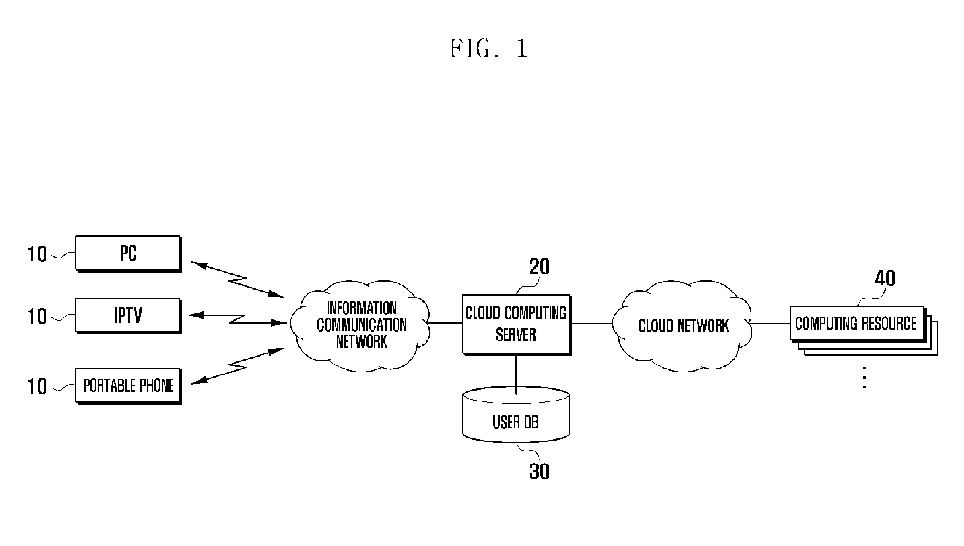

FIG. 1 is a block diagram illustrating a configuration of a network of a cloud computing based video service system according to an exemplary embodiment of the present invention.

Referring to FIG. 1, a video service system of an exemplary embodiment of the present invention may include a terminal 10, a cloud computing server (referred to as 'server' hereinafter) 20, a user DataBase (DB) 30, and computing resources 40.

The terminal 10 accesses the server 20 through an information communication network including the Internet and a mobile communication network. The terminal 10 may be provided with a cloud computing service, in particular, a video playing service from the server 20. The terminal 10 may be various electronic devices such as a desktop Personal Computer (PC), a tablet PC, a Portable Multimedia Player (PMP), or a smart phone capable of accessing the Internet.

The server 20 combines a plurality of computing resources 40 distributed via a cloud network, in particular, video databases may be distributed at different physical locations using a virtualization technology to provide a service requested from the terminal 10.

User information registered in a cloud computing service is stored in the user DB 30. Here, the user information may contain log-in information, private credit information such as addresses and names, billing information such as settlement contents, settlement accounts, and settlement cards, and point and coupon information for paying a use fee with respect to a video instead of settlement. Further, the user information may contain a video index. Here, the video index may contain a list of played videos, a list of playing videos, and a stopped time point of the played videos.

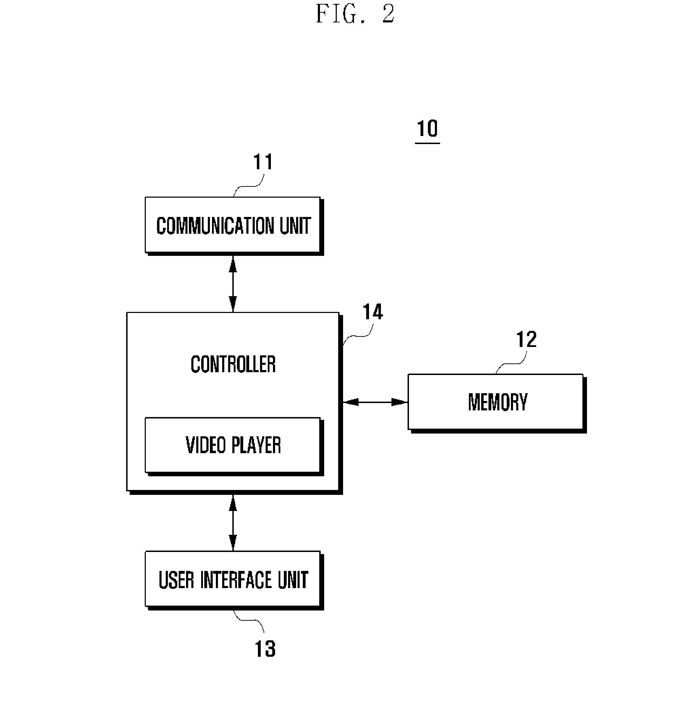

FIG. 2 is a block diagram illustrating a configuration of a terminal according to an exemplary embodiment of the present invention.

Referring to FIG. 2, a terminal 10 of an exemplary embodiment of the present invention may include a communication unit 11 for communicating with a server 20, a memory 12 for storing various types of data, instructions executable by the controller 14, data generated by the controller 14, and programs, an interface unit 13 for exchanging information with a user that is configured by a touch screen or a display such as a Liquid Crystal Display (LCD), and a controller 14 for controlling the communication unit 11, the memory 12, and the interface unit 13. The controller 14 includes a video player.

The server 20 may be configured similar to the terminal 10. That is, the server may include a communication unit for communicating with the terminal 10, a memory for storing various types of data, instructions executable by the controller, data generated by the controller, and programs, an interface unit for exchanging information with a user, and a controller for controlling the communication unit, the memory, and the interface unit.

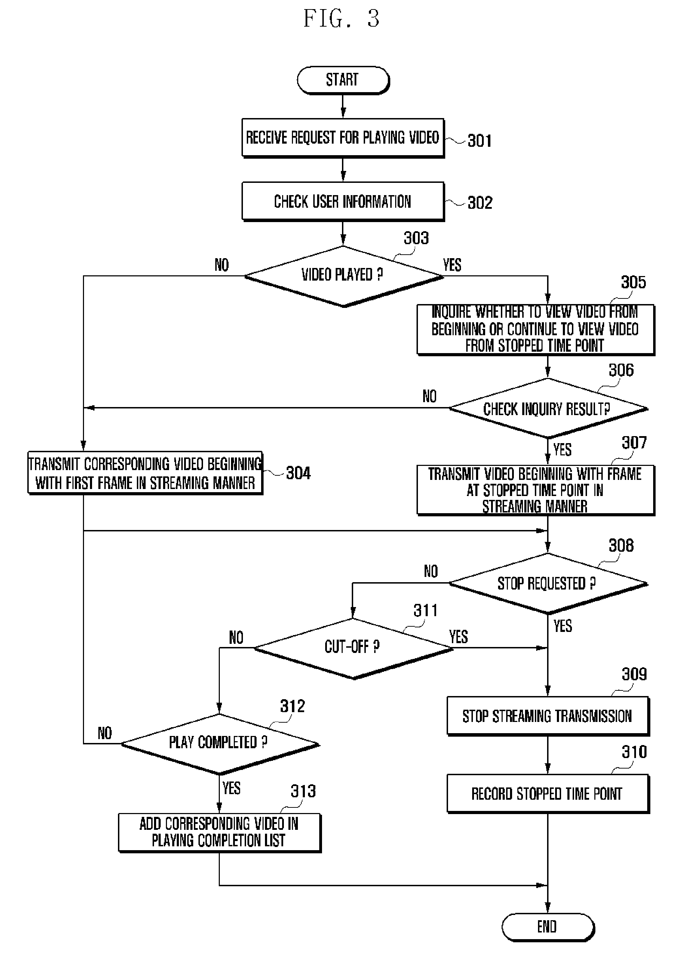

FIG. 3 is a flowchart illustrating a video service method of a cloud computing server according to a first exemplary embodiment of the present invention.

Referring to FIG. 3, a terminal accesses and logs-in to a server. Accordingly, the server provides a video list to the terminal. Further, the server receives a request for playing a video from the terminal at step 301. Next, the server checks user information of the terminal from a user DB at step 302.

The server determines whether the video requested by the terminal has been played at step 303. When the server determines at step 303 that a corresponding video is to be played for the first time or has been completely played, the server transmits the corresponding video beginning with a first frame of the video in a streaming manner at step 304. In this case, if the corresponding video needs to be paid for and is to be played for the first time or a use time period has expired, the server may perform an on-line settlement associated with a settlement server and an authentication server. Thus, the video data is transmitted as a stream, such that it can be received and displayed by a receiving terminal as it is being received, without having to wait for the entire video file to be received. It will be appreciated that the data stream may take a wide variety of forms, as will be apparent to the skilled person. Thus, in certain embodiments the video data may be transmitted in frame by frame in a sequence and/or may be transmitted in a compressed form. However, the invention in its broadest sense is not limited to any particular form of streaming.

In contrast, when the server determines at step 303 that the corresponding video was previously played, the server sends an inquiry the terminal to inquire whether to view the video from the beginning or continue to view the video from a stopped time point at step 305. Next, the server checks a result of the inquiry received from the terminal at step 306. When the result of the inquiry at step 306 is that the terminal selects to view the video from the beginning, the process proceeds to step 304. In contrast, when the result of the inquiry at step 306 is that the terminal selects to continue viewing the video from the stopped time point, the server transmits the video to the terminal beginning with a frame at the stopped time point in a streaming manner at step 307. Here, steps 305 and 306 may be omitted, and when steps 305 and 306 are omitted the process may proceed to step 307 directly after step 303. That is, when the servers determines that the corresponding video was previously played, the server transmits the video to the terminal beginning with the frame at the stopped time point in the streaming manner at step 307.

The server determines whether the terminal requests the video being played to be stopped at step 308. Here, the term "stop" refers to STOP, PAUSE, or a termination of an execution of a video player. When the terminal requests the video being played to stop at step 308, the server stops streaming transmission of the video at step 309. The sever records a stopped time point in corresponding user information at step 310. After performing step 310, if a terminal is not logged-out but the video is again requested to be played while in a pause state of play, the process returns to step 307 and the server may restart streaming transmission from the paused time point (not shown). When the playing of the video is stopped or the terminal is not logged-out but a request to play the video is again requested in a state where execution of a video player is terminated, the server may return to step 305 (not shown).

If the terminal did not request the stopping of the video at step 308, the server determines whether a connection with the terminal is cut-off at step 311. If the connection with the terminal is cut-off at step 311, the process proceeds to step 309. Conversely, if the connection with the terminal is not cut-off, the server determines whether the playing of the video has been completed at step 312. When the playing of the video has not been completed at step 312, the process returns to step 308. If the playing of the video has completed, the server adds the corresponding video in a playing completion list of the user information at step 313.

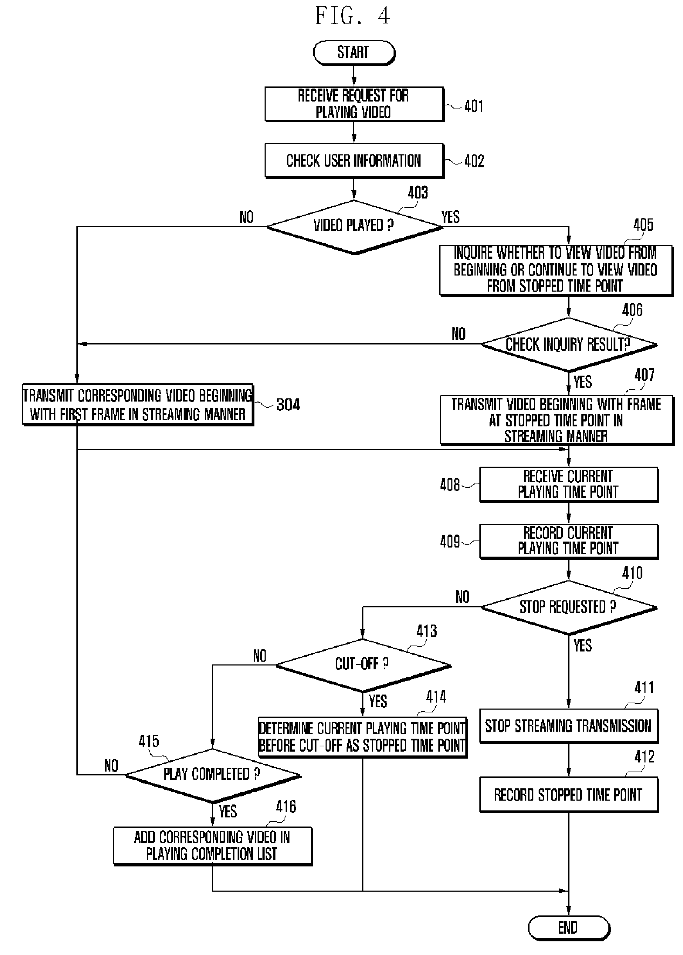

FIG. 4 is a flowchart illustrating a video service method of a cloud computing server according to a second exemplary embodiment of the present invention.

Referring to FIG. 4, the server receives a request for playing a video from the terminal at step 401. Next, the server checks user information of the terminal from a user DB at step 402. The server determines whether the video requested by the terminal has been played at step 403. When the server determines at step 403 that a corresponding video is to be played for the first time or has been completely played, the server transmits the corresponding video beginning with a first frame of the video in a streaming manner at step 404.

When the server determines at step 403 that the corresponding video has been previously played, the server sends an inquiry to the terminal to inquire whether to view the video from the beginning or continue to view the video from a stopped time point at step 405. Next, the server checks a result of the inquiry received from the terminal at step 406. When the result of the inquiry at step 406 is that the terminal selects to view the video from the beginning, the process proceeds to step 404. When the result of the inquiry at step 406 is that the terminal selects to continue to view the video from the stopped time point, the server transmits the video to the terminal beginning at a frame of the stopped time point of the video in a streaming manner at step 407.

The server receives a current playing time point of the video being played in the terminal from the terminal at step 408. Next, the server records the current playing time point in the user information at step 409. Here, the server may periodically request the current playing time point from the terminal. Conversely, the terminal may periodically transmit the current playing time point to the server.

The server determines whether the terminal requests that the video being played is stopped at step 410. When the video being played is requested to be stopped at step 410, the server stops streaming transmission of the video at step 411. The sever records a stopped time point in corresponding user information at step 412. After performing step 412, if the terminal is not logged-out but the video is again requested to be played while in a pause state of the play, the process returns to step 407 and the server may restart streaming transmission from the paused time point (not shown). When the play stops or the terminal is not logged-out but the video is again requested to be played while in a state where execution of a video player is terminated, the server may return to step 405 (not shown).

If the terminal did not request the stopping of the video at step 410, the server determines whether a connection with the terminal is cut-off at step 413. If the connection with the terminal is cut-off at step 413, the server determines a playing time point before cut-off as the stopped time point and records the stopped time point in the user information at step 414. Conversely, if the connection with the terminal is not cut-off, the server determines whether the playing of the video has been completed at step 415. When the playing of the video has not been completed at step 415, the process returns to step 408. If the playing of the video has been completed, the server adds the corresponding video in a playing completion list of the user information at step 416.

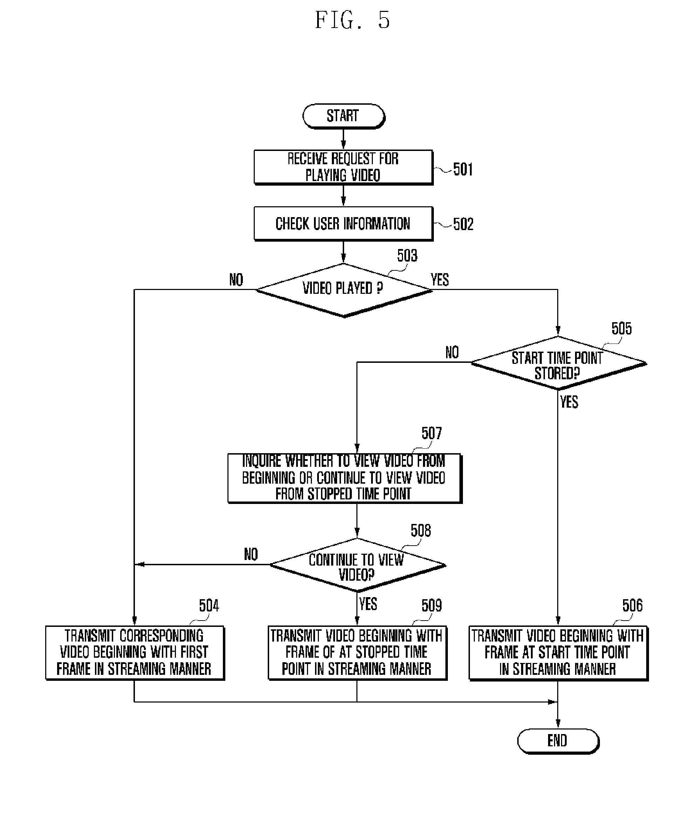

FIG. 5 is a flowchart illustrating a video service method of a cloud computing server according to a third exemplary embodiment of the present invention.

A user may optionally designate a start time point of the next time a video is played regardless of a time point the video was stopped the last time the video was played. That is, the user may designate a time point at which to continue to view the video as a stopped time point, or a time point before or after the stopped time point. The terminal transmits a time point at which the video is to be played to a server. Accordingly, the server records the time point received from the terminal in corresponding user information.

Referring to FIG. 5, the server receives a request for playing a video from the terminal at step 501. Next, the server checks user information of the terminal from a user DB at step 502. The server determines whether the video requested from the terminal has been played at step 503. When the server determines at step 503 that a corresponding video is to be played for the first time or has been completely played, the server transmits the corresponding video beginning with a first frame of the video in a streaming manner at step 504.

If the corresponding video has been previously played at step 503, the server checks a user DB to determine whether the user optionally sets a start time point to play the video at step 505. When the start time point is stored in the user DB at step 505, the server transmits the video beginning with a frame at the start time point in the streaming manner to the terminal at step 506.

When the server determines at step 505 that the start time point is not stored in the user DB, the server sends an inquiry to the terminal to inquire whether to view the video from the beginning or to continue to view the video from a stopped time point at step 507. Next, the server checks a result of the inquiry received from the terminal at step 508. When a result of the inquiry at step 508 is that the terminal selects to view the video from the beginning, the process proceeds to step 504. When the result of the inquiry at step 508 is that the terminal selects to continue to view the video from a stopped time point, the server transmits the video to the terminal beginning with a frame of the video at the stopped time point in the streaming manner at step 509.

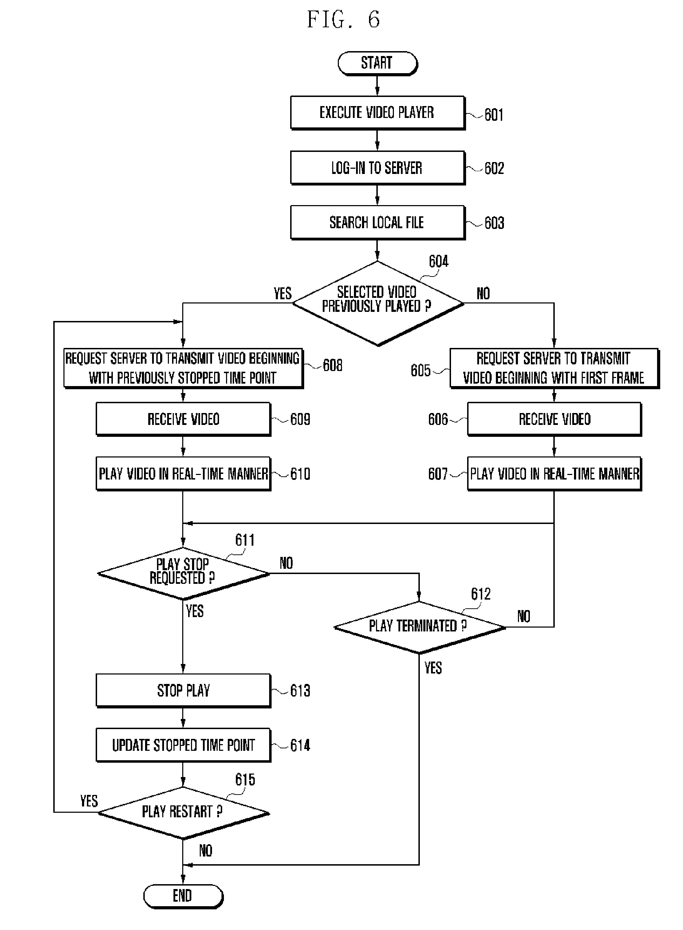

FIG. 6 is a flowchart illustrating a video playing method of a terminal according to a first exemplary embodiment of the present invention. The video playing method of a terminal may be executed by the controller 14 of the terminal 10.

Referring to FIG. 6, the controller 14 executes a video player at step 601. Next, the controller 14 logs-in to a server at step 602. Subsequently, the controller 14 searches a local file of the server to select a video to be played at step 603. The controller 14 determines whether the selected video has been previously played at step 604. The controller 14 may determine whether the selected video has been previously played from user information of the server. Further, the controller may determine whether the selected video has been previously played from a memory 12 of the terminal 10. Here, step 601 may be performed directly after step 604. That is, after selecting the video to be played, the controller 14 may execute a video player.

If the controller 14 determines at step 604 that a corresponding video is to be played for the first time or has been completely played, the controller 14 requests the server to transmit the video beginning with a first frame of the video at step 605. Next, the controller 14 receives the video at step 606, and plays the received video in a real-time manner at step 607.

In contrast, if the controller 14 determines at step 604 that the corresponding video has been previously played, the controller 14 requests the server to transmit the video beginning with a frame of a previously stopped time point at step 608. Subsequently, the controller 14 receives the video at step 609, and plays the received video in a real-time manner at step 610. Here, the stopped time point may be identified from user information of the server 20. Further, the stopped time point may be identified from the memory 12 of the terminal 10.

The controller 14 determines whether a request to stop playing the video is input from a user interface unit 13 at step 611. When the controller 14 determines that the request to stop playing the video is not input at step 611, the controller 14 determines whether the playing of the video is terminated at step 612. If the video is playing at step 612, the process returns to step 611. In contrast, if the video is not playing at step 612, the process ends.

Conversely, when the controller 14 determines that the request to stop playing the video is input at step 611, the controller 14 stops the playing of the video and requests the server to stop the streaming transmission of the video at step 613. The controller 14 updates a stopped time point of playing of the video in the server at step 614. Further, the stopped time point may be updated in the memory 12. Next, the controller 14 determines whether the playing of the video restarts at step 615. When an input for restarting the playing of the video occurs from the user interface unit 13 at step 615, the process returns to step 608.

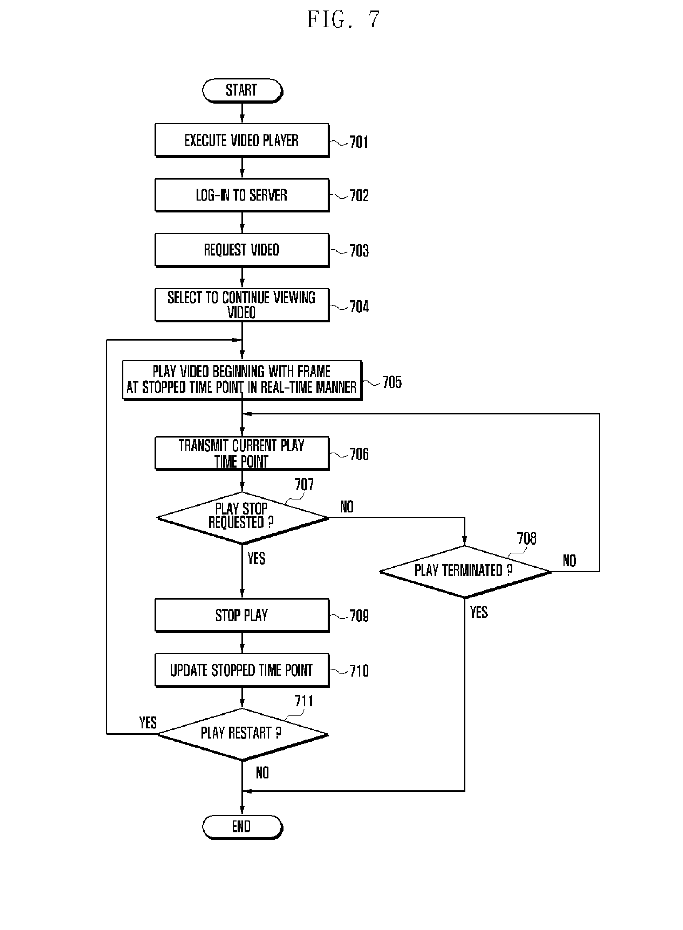

FIG. 7 is a flowchart illustrating a video playing method of a terminal according to a second exemplary embodiment of the present invention. The video playing method of a terminal may be executed by the controller 14 of the terminal 10.

Referring to FIG. 7, a controller 14 executes a video player at step 701. Next, the controller 14 logs-in to a server at step 702. The controller 14 requests a video from a server at step 703. If the server requests one of viewing the video from the beginning or continuing to view the video from a stopped time point, the controller 14 selects to continue to view the video at step 704. Here, step 701 may be performed after step 704. That is, the controller 14 may select to continue to view the video and then executes the video player.

The controller 14 receives the video beginning with a frame at a stopped time point and plays the received video in a real-time manner at step 705. Next, the controller 14 periodically transmits a current playing time point of the video to the server at step 706. Subsequently, the controller 14 determines whether a request to stop playing the video is input from a user interface unit 13 at step 707. If the request to stop playing the video is not input, the controller 14 determines whether the playing of the video is terminated at step 708. If the video is playing at step 708, the process returns to step 706. In contrast, if the video is not playing at step 708, the process ends.

Conversely, when the request to step playing the video is input at step 707, the controller 14 stops the playing of the video and requests the server to stop the streaming transmission of the video at step 709. The controller 14 updates a stopped time point of the playing of the video in the server at step 710. Next, the controller 14 determines whether the playing of the video restarts at step 711. When input for restarting playing of the video occurs from the user interface unit 13 at step 711, the process returns to step 705.

The cloud computing based video service and playing methods of the present invention are not limited to the foregoing exemplary embodiments. However, many variations and modifications of the basic inventive concepts herein taught will still fall within the spirit and scope of the present invention. For example, it is assumed that a user watches a video on a portable terminal at office-going hours and watches it by an Internet Protocol TeleVision (IPTV) after leaving the office. The portable terminal transfers stopped time point information stored in a memory to the IPTV through, for example, Bluetooth. Accordingly, the IPTV logs-in to the cloud computing server, and continues to receive the video beginning with a frame at a stopped time point, and plays the received video in a real-time manner.
It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.
Throughout the description and claims of this specification, the words "comprise" and "contain" and variations of the words, for example "comprising" and "comprises", means "including but not limited to", and is not intended to (and does not) exclude other moieties, additives, components, integers or steps.
Throughout the description and claims of this specification, the singular encompasses the plural unless the context otherwise requires. In particular, where the indefinite article is used, the specification is to be understood as contemplating plurality as well as singularity, unless the context requires otherwise.
Features, integers, characteristics, compounds, chemical moieties or groups described in conjunction with a particular aspect, embodiment or example of the invention are to be understood to be applicable to any other aspect, embodiment or example described herein unless incompatible therewith.
It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the invention has been shown and described with reference to certain exemplary embodiments thereof, it will be understood by those skilled in the art that various changes in form and details may be made therein without departing from the spirit and scope of the present invention, as defined in the appended claims and their equivalents.

## Claims

1. A video service method of a cloud computing server, the method comprising:
transmitting a requested video to a terminal in a streaming manner when the terminal requests play of the video;
stopping the streaming transmission of the video and storing a stopped time point of the play in a user database when the terminal stops the play of the video; and
transmitting the video beginning with a frame of the video at the stopped time point to the terminal or another terminal having requested play of the video in the streaming manner when the terminal or the other terminal requests the play of the video,
wherein the terminal or the other terminal having requested the play receives and plays the video beginning with the frame of the video at the stopped time point in a real-time manner.

2. The method of claim 1, further comprising determining a cut-off time point as the stopped time point and storing the determined cut-off time point in the user database when connection with the terminal is cut-off.

3. The method of claim 1 or claim 2, further comprising sending an inquiry to the terminal or the other terminal having requested the play to inquire whether the terminal or the other terminal selects to view the video from the beginning or continue to view the video from the stopped time point.

4. The method of claim 3, further comprising:
receiving a start time point of play with respect to the video from the terminal and storing the received start time point of play in the user database; and
transmitting the video beginning with a frame at the start time point to the terminal or other terminal having requested the play of the video in a streaming manner when the play of the video is requested from the terminal or the other terminal.

5. The method of claim 1, further comprising:
periodically receiving a current playing time point of the video from the terminal;
recording the current playing time point in the user information; and
determining the current playing time point as the stopped time point and storing the determined current playing time point in the user database when connection with the terminal is cut-off.

6. A video service method of a cloud computing server, the method comprising:
receiving a request for play of a video from a terminal;
checking a user database of the terminal; and
transmitting the video beginning with a frame at a stopped time point in a streaming manner when the video was stopped while previously being played,
wherein the terminal receives and plays the video beginning with the frame at the stopped time point in a real-time manner.

7. The method of claim 6, further comprising storing the stopped time point corresponding to a time point when the terminal stops the play of the video in the user database when the terminal stops the play of the video while streaming transmission.

8. The method of claim 7, further comprising determining a cut-off time point when connection with the terminal is cut-off while streaming transmission and storing the determined cut-off time point in the user database as the stopped time point.

9. The method of claim 7 or claim 8, wherein the transmitting of the video comprises:
sending an inquiry to the terminal to inquire whether the terminal selects to a view the video from the beginning or continue to view the video when the stopped time point of the video is stored in the user database; and
transmitting the video beginning with the frame at the stopped time point in the steaming manner when the terminal selects to continue to view the video.

10. A method for playing a video of a terminal, the method comprising:
receiving the video from a cloud computing server and playing the received video in a real-time manner;
stopping play of the video according to a request of a user; and
transmitting the stopped time point of the play to the cloud computing server,
wherein the cloud computing server transmits the video beginning with a frame at the stopped time point to the terminal or another terminal in a steaming manner when the terminal or the other terminal requests the video.

11. The method of claim 10, further comprising periodically transmitting a current playing time point of the video to the cloud computing server,
wherein the cloud computing server transmits the video beginning with a frame of the current play time point in a streaming manner when the terminal or other terminal again requests to play the video after connection with the terminal is cut-off.

12. A cloud computing server for providing a video service, the cloud computing server comprising:
a memory for storing a user database;
a communication unit for communicating with one or more terminals; and
the controller for controlling the memory and the communication unit, wherein the controller controls to transmit a requested video to a terminal in a streaming manner when the a first request to play the video is received from the terminal, controls to stop the streaming transmission of the video and store a stopped time point of the play in the user database when an indication is received from the terminal that the playing of the video by the terminal has stopped, and controls to transmit the video beginning with a frame of the video at the stopped time point to the terminal or another terminal from which a second request to play the video in the streaming manner is received.

13. A cloud computing server for providing a video service, the cloud computing server comprising:
a memory for storing a user database;
a communication unit for communicating with one or more terminals; and
the controller for controlling the memory and the communication unit, wherein, the controller, when a request to play a video is received from a terminal, checks the user database of the terminal, and controls to transmit the video beginning with a frame at a stopped time point in a streaming manner when the video was stopped while previously being played.

14. A terminal for playing a video by using a video service, the terminal comprising:
a memory;
a communication unit for communicating with a cloud computing server; and
the controller for controlling the memory and the communication unit, wherein the controller, when the video is received from a cloud computing server, controls to play the received video in a real-time manner, controls to stop play of the video according to a request of a user, and controls to transmit the stopped time point of the play to the cloud computing server.
